**Europäisches Patentamt**

**European Patent Office**

**Office européen des brevets**

(11) Numéro de publication: **0 127 509**
**B1**

(12) **FASCICULE DE BREVET EUROPEEN**

(45) Date de publication du fascicule du brevet:
**22.04.87**

(21) Numéro de dépôt: **84400878.9**

(22) Date de dépôt: **02.05.84**

(51) Int. Cl.⁴: **B 65 D 77/20,** B 65 B 7/28, B 65 B 51/22

(54) Procédé de fermeture étanche de récipients en matière plastique et récipients obtenus selon ce procédé.

(30) Priorité: **03.05.83 FR 8307312**

(43) Date de publication de la demande:
**05.12.84 Bulletin 84/49**

(45) Mention de la délivrance du brevet:
**22.04.87 Bulletin 87/17**

(84) Etats contractants désignés:
**AT BE CH DE GB IT LI LU NL SE**

(56) Documents cités:
**EP - A - 0 037 101**
**EP - A - 0 037 101**
**EP - A - 0 037 101**
**EP - A - 0 038 108**
**FR - A - 1 334 895**
**GB - A - 2 020 605**

(73) Titulaire: **MONOPLAST S.A., F-40140 Soustons (FR)**

(72) Inventeur: **Charpentier, Gérard Jean-Marie, 34 avenue Laplace, F-40140 Soustons (FR)**

(74) Mandataire: **Viard, Jean, Cabinet VIARD 28 bis, avenue Mozart, F-75016 Paris (FR)**

## Description

La présente invention a pour objet un procédé de fermeture ou d'obturation de récipients en matière plastique destiné en particulier, mais non exclusivement, à la fermeture étanche de pots tels que des pots de yaourt, ainsi que les récipients obtenus selon ce procédé.

On sait qu'après remplissage, les pots contenant des produits laitiers doivent être fermés d'une manière étanche en vue de permettre leur acheminement jusqu'à la tabel du consommateur. Par ailleurs, s'agissant de produits alimentaires, il est indispensable, pour de multiples raisons, que les pots soient fermés d'une manière inviolable, c'est-à-dire que la première ouverture du pot doit provoquer une modification apparente de l'emballage. D'autre part, il est souhaitable que le pot puisse s'ouvrir facilement notamment par pelage de l'opercule constituant le couvercle.

Ces résultats sont actuellement obtenus par application sur le rebord du pot d'une couche fine de laque thermofusible ou d'un mélange de cires et de résines désigné dans la technique sous le nom de «hot melt», entre le rebord du pot constitué en polystyrène ou en polyéthylène et un couvercle d'aluminium ou de matière plastique. Le point de fusion et le temps d'ouverture (temps de retour à l'état solide) sont réglés par une composition appropriée du mélange pour que la fermeture du récipient puisse être effectuée par une thermocompression qui n'affecte pas la résistance du bord ou collerette du pot.

Dans le document EP-A-O 037 101 (SCHEUCH) il est proposé d'assurer la fermeture d'un tel récipient à l'aide d'un couvercle multicouches, incluant une couche de colle adhérant à la température ambiante. Avant application du couvercle sur le récipient, cette couche de colle est protégée par une couche externe friable, par exemple en paraffine, qui n'est pas adhérente sur le récipient à température ambiante.

Le rebord du récipient est muni de reliefs qui, lorsqu'une pression est exercée, pour fermer le récipient brise la couche friable et amène certaines parties de la couche de colle au contact de certains reliefs du rebord. Cette solution n'est pas complètement satisfaisante. En effet, les fragments de la couche de protection subsistent entre la colle et le rebord du récipient de sorte que le contact établi ne l'est que sur un partie de la surface totale. Au moment de l'ouverture, l'aspect du couvercle et celui du récipient ne sont pas nets ce qui est inacceptable pour des produits alimentaires.

La présente invention a pour but de pallier les inconvénients liés à l'emploi d'une colle adhésive à températaute ambiante. Selon la présente invention, le procédé de fermeture étanche d'un récipient présentant une ouverture entourée par un rebord plan, par un couvercle multicouches en matières plastiques synthétiques, le couvercle étant pressé contre le rebord du récipient par une plaque plane, est caractérisé en ce qu'il consiste à:
— former dans le rebord du récipient au moins un jonc périphérique en saillie par rapport à la surface supérieure du rebord,
— appliquer avec pression le couvercle sur le rebord du récipient de sorte que le jonc pénètre à l'intérieur de la couche inférieure du couvercle, la couche étant adhérente sous une pression mécanique sur le rebord de façon à ce que le jonc pénètre dans la couche en provoquant une déformation plastique localisée de celle-ci, et l'épaisseur de la couche étant supérieure ou égale à la hauteur du jonc.

Ainsi, la liaison est assurée par contact de la chouche inférieure du couvercle et l'ensemble de la surface du rebord ou collerette, le jonc assurant une étanchéité parfaite par sa pénétration dans la couche.

L'invention consiste essentiellement à faire pénétrer un jonc formé dans le rebord supérieur du récipient dans une couche inférieure du couvercle sans briser celle-ci de manière à ce que le couvercle adhère tout en restant pelable. Cette pénétration nécessite l'application d'une pression. En fonction du choix des composants de la couche inférieure du couvercle, cette action de pression peut être suffisante pour permettre une bonne adhérence entre le couvercle et le récipient, la forme du jonc en facilitant la pénétration à l'intérieur de la couche inférieure de manière à ce qu'il se forme une soudure à froid. Toutefois, la qualité de cette soudure risque de ne pas être suffisante. Il est alors possible d'apporter, à l'aide de la plaque de pression de l'énergie supplémentaire.

Selon une autre caractéristique de l'invention, la pression de fermeture du récipient est appliquée à l'aide d'une sonotrode émettant des ultrasons. Dans ce cas, la présence du jonc joue le rôle de concentrateur, d'énergie de sorte qu'il est possible d'utiliser une électrode plane ce qui évite de marquer la surface supérieure de la collerette.

Avantageusement, le couvercle est constitué de trois couches de matériaux différents. La couche inférieure destinée à venir en contact avec la collerette est, par exemple, composée d'un mélange thermoformable comprenant de l'acétate de vinyle du type EVA. La couche supérieure peut être composée de polystyrène, de polypropylène ou d'un autre matériau tel que de l'aluminium alors que la couche intermédiaire est, par exemple, à base de polyoléfine. La couche intermédiaire a principalement pour but d'éviter toute détérioration par soudure autogène, sous l'action des ultrasons, entre la couche supérieure et le bord du récipient lorsque la pression est appliquée par une sonotrode. Il est en effet essentiel que le couvercle soit toujours pelable, sans altération du rebord.

D'autres caractéristiques et avantages de la présente invention apparaîtront au cours de la description qui va suivre d'un mode de réalisation particulier, donné à titre d'exemple en regard des dessins qui représentent:

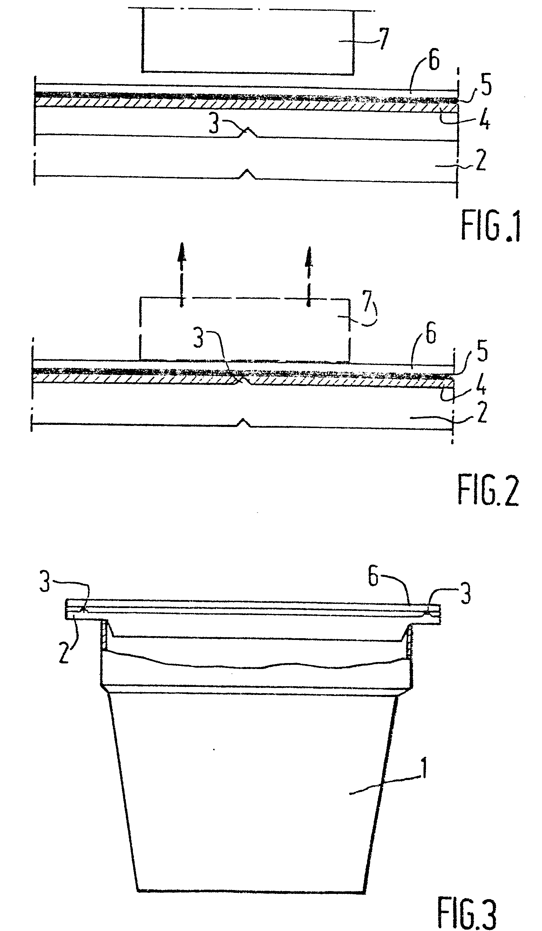

— Les Figs. 1 et 2, deux étapes du procédé;
— La Fig. 3, un pot obturé selon le procédé de l'invention.

Sur les Figs. le pot 1, de forme générale tronconique par exemple, présente à sa partie supérieure une collerette ou rebord 2 horizontal. Au cours de la fabrication du pot 1, on forme dans la collerette 2 au moins un jonc 3 qui s'étend en une ligne continue sur tout le rebord. De préférence le jonc 3 a une section triangulaire ce qui facilite sa pénétration. Il fait saillie par rapport à la surface supérieure de la collerette d'une hauteur de 0,2 mm. par exemple.

Au-dessus du pot 1 on amène un couvercle comprenant une couche inférieure 4, une couche intermédiaire 5 et une couche supérieure 6. L'épaisseur de la couche 4 est, par exemple de 0,2 mm, mais toujours égale ou supérieure à la hauteur du jonc 3. Les autres couches peuvent être d'épaisseurs quelconques et, par exemple de 0,05 mm pour la couche 5 et de 0,2 mm pour la couche 6.

Le stratifié reposant sur la collerette 2, on amène alors la plaque de pression 7 solidaire d'une presse (non représentée) contre la couche supérieure 6. La référence 7 peut également désigner une sonotrode ou une plaque de thermocompression. La plaque 7 ne comporte pas de concentrateur d'énergie comme on en trouve sur les sonotrodes actuellement utilisées. Sous l'action de la pression il se produit un fluage de la matière de la couche 4 avec pénétration corrélative du jonc 3 à l'intérieur de la couche 4. L'étanchéité est assurée, entre autre, par application de la matière de la couche 4 contre les côtés du jonc 3. La couche 4 se comporte donc comme un joint d'étanchéité. Ainsi qu'il est connu, la délamination qui est observée lors de la coextrusion de copolymères est utilisée pour assurer la pelabilité du couvercle qui peut ainsi être détaché du pot avec une faible force de traction.

Compte tenu de la structure de la liaison établie entre le pot et son couvercle, les réglages des machines peuvent être simplifiés puisqu'il est possible de rattraper des défauts de planéité.

Les pressions utilisées peuvent atteindre plusieurs dizaines de bars mais elles dépendent, bien entendu, de la nature des matériaux constituant le rebord 2 et la couche 4. Dans le cas d'une soudure par simple pression (soudure à froid), on forme, de préférence, plusieurs joncs afin d'augmenter l'adhérence.

Bien entendu, la présence du jonc 3 ne fait nullement obstacle à la formation dans le couvercle de moyens d'enclipsage permettant une réutilisation du récipient après une première ouverture. Enfin, bien que la présente invention s'applique plus particulièrement aux récipients en matières plastiques, elle peut également être mise en œuvre avec des récipients en matériaux quelconques.

## Revendications

1. Procédé de fermeture étanche d'un récipient présentant une ouverture entourée par un rebord plan, par un couvercle multicouches en matières plastiques synthétiques, le couvercle étant pressé contre le rebord du récipient par une plaque plane, caractérisé en ce qu'il consiste à:
   - former dans le rebord (2) du récipient au moins un jonc (3) périphérique en saillie par rapport à la surface supérieure du rebord,
   - appliquer avec pression le couvercle sur le rebord (2) du récipient de sorte que le jonc (3) pénètre à l'intérieur de la couche inférieure (4) du couvercle, la couche (4) étant adhérente sous une pression mécanique sur le rebord (2) de façon à ce que le jonc (3) pénètre dans la couche (4) en provoquant une déformation plastique localisée de celle-ci, et l'épaisseur de la couche étant supérieure ou égale a la hauteur du jonc.

2. Procédé selon la revendication 1, caractérisé en ce que la plaque de pression (7) est une sonotrode.

3. Procédé selon la revendication 1, caractérisé en ce que la plaque de pression (7) est une électrode de thermocompression.

4. Procédé selon les revendications 1 et 2, caractérisé en ce qu'une couche intermédiaire (5) incluse entre la couche (4) et la couche (6) constitue une protection contre la soudure autogène entre la couche supérieure (6) et le rebord (2).

5. Procédé selon la revendication 4, caractérisé en ce que la couche (4) est une couche d'acétate de vinylidène EVA dont l'épaisseur est sensiblement de 0,2 mm, la chouche (3) étant une couche de polyoléfine dont l'épaisseur est sensiblement de 0,05 mm.

6. Procédé selon les revendications 1 à 5, caractérisé en ce que le jonc (3) est à section triangulaire.

## Patentansprüche

1. Verfahren zum dichten Verschliessen eines Behälters, der eine von einem ebenen Rand umgebende Öffnung aufweist, durch einen mehrschichtigen Deckel aus synthetischem Kunststoffmaterial, wobei der Deckel durch eine ebene Platte gegen den Rand des Behälters gedrückt wird, dadurch gekennzeichnet, dass
   - an dem Rand (2) des Behälters wenigstens eine in bezug auf die obere Oberfläche des Randes hervortretende Umfangswulst (3) gebildet wird;
   - der Deckel derart auf den Rand (2) des Behälters mit Druck aufgedrückt wird, dass die Wulst (3) in das Innere der unteren Schicht (4) des Deckels eindringt, wobei die Schicht (4) unter einem mechanischen Druck dergestalt auf dem Rand (2) festhaftet, dass das Eindringen der Wulst (3) in die Schicht (4) eine örtliche plastische Verformung derselben hervorruft, und die Dicke der Schicht grösser oder gleich ist der Höhe der Wulst.

2. Verfahren nach Anspruch 1, dadurch gekennzeichnet, dass die Druckplatte (7) eine Schallwellenelektrode ist.

3. Verfahren nach Anspruch 1, dadurch gekennzeichnet, dass die Druckplatte (7) eine Thermokompressionselektrode ist.

4. Verfahren nach Anspruch 1 oder 2, dadurch gekennzeichnet, dass eine zwischen der Schicht (4) und der Schicht (6) eingefügte Zwischenschicht (5) einen Schutz gegen eine autogene Verschweissung zwischen der oberen Schicht (6) und dem Rand (2) bildet.

5. Verfahren nach Anspruch 4, dadurch gekennzeichnet, dass die Schicht (4) ein Vinylacetat EVA ist, dessen Dicke deutlich 0,2 mm ist, wobei die Schicht (5) eine Polyolefin-Schicht ist, deren Dicke 0,05 mm ist.

6. Verfahren nach einem der Ansprüche 1 bis 5, dadurch gekennzeichnet, dass die Wulst (3) im Querschnitt dreieckförmig ist.

## Claims

1. A method of closing in sealed manner a receptacle having an opening surrounded by a flat rim, by means of a multi-layer cover made of synthetic plastic materials, the cover being pressed against the rim of the receptacle by a plane plate, the method being characterized in that it consists in:

forming at least one peripheral rod (3) in the rim (2) of the receptacle and projecting from the top surface of the rim; and

pressing the cover against the rim (2) of the receptacle so that the rod (3) penetrates into the bottom layer (4) of the cover, said layer (4) adhering under mechanical pressure to the rim (2) in such a manner that the rod (3) penetrates into the layer (4) by causing local plastic deformation thereof; where the thickness of the layer is not less than the height of the rod.

2. A method according to claim 1, characterized in that the pressure plate (7) is a sonotrode.

3. A method according to claim 1, characterized in that the pressure plate (7) is a thermo-compression electrode.

4. A method according to claims 1 and 2, characterized in that an intermediate layer (5) included between the layer (4) and a layer (6) provides protection against the top layer (6) being welded to the rim (2).

5. A method according to claim 4, characterized in that the layer (4) is a substantially 0.2 mm thick layer of EVA vinylidene acetate, and the layer (3) is a substantially 0.05 mm thick layer of polyolefin.

6. A method according to claims 1 to 5, characterized in that the rod (3) is triangular in section.

FIG.1

FIG.2

FIG.3